# EUROPEAN PATENT APPLICATION

(11) **EP 4 369 210 A2**
(43) Date of publication of application: **15.05.2024**
(21) Application number: 24165546.3
(22) Date of filing: 04.05.2017
(51) Int. Cl.: G06F 15/76

(54) **ASSURING EXTERNAL ACCESSIBILITY FOR DEVICES ON A NETWORK**

(62) Divisional of application: 17908120.3
(71) Applicant: Brickell Cryptology LLC, Hillsboro OR 97124 (US)
(72) Inventor: BRICKELL, Ernest, Hillsboro, Oregon 97124 (US)
(74) Representative: Käck, Stefan

(57) **Abstract**

The present invention relates to a computing device (200). The computing device (200) is operated by a user of the computing device (200). The computing device (200) comprises an access control module (210) configured to authorize an external access entity (266) to access a cryptographic module (240) located within the computing device (200). The authorization comprises verifying a digital signature affixed by the external access entity (266) using a public verification key (211) embedded in the computing device (200). The external access entity (266) is a different entity than one of the users (142) of the computing device (200) and is external to the computing device (200). The cryptographic module (240) is configured to use one or more communication encryption keys for encrypted communications with other devices. The cryptographic module (240) is further configured to provide access to the one or more communication encryption keys (242) to the external access entity (266) authorized by the access control module (210).

## Description

### TECHNICAL FIELD

The present invention relates generally to computer security for individuals and corporations, and the often competing requirements of law enforcement to sometimes request access to personal information stored on computers.

### BACKGROUND ART

There is prior art disclosing methods for a network access point to check whether a device requesting access to a network has authorization credentials to access the network. For example, the network access point may request a user name and password for a user of the device prior to granting access. In another example, a cell phone service provider may check to see if a cell phone has an account with Internet access privilege before providing Internet access to a cell phone.

U.S. Patent Application Publication No. US 2018/0131677 A1 discloses a method for a computing device to allow access to authorized external access entities to user information on the computing device.

There is prior art (for example, Intel Manageability Engine, Intel Software Guard Extensions, Intel Trusted Execution Technology, Intel Authenticated Code Modules, and ARM trust zone) disclosing methods for executing a module in a partition of a computing device, and protecting that module from software executing outside that partition.

There is prior art disclosing the design and implementation of key escrow systems, wherein a key escrow agent is provided with cryptographic keys that can be used at any time to decrypt communications from a device.

Computing devices have been proposed that would allow for authorized law enforcement entities special privileges in unlocking the device, for decrypting messages communicated by the device, and/or for retrieving information stored or used on the device. A country or other political entity could require that all devices sold in that country conform to specified policies for authorized law enforcement access. But all countries may not have the same policies, and some countries may not cooperate with law enforcement entities of another country. The purpose of this invention is to present a method whereby a policy enforcing network access point can set a policy requirement for law enforcement access for any devices that it allows on a network, and then robustly verify whether a device meets this policy requirement before allowing the device on the network. With this invention, a country could set a law enforcement access policy requirement for devices that obtain Internet access within the country.

There is prior art for a network access point to verify properties of a user or a device before allowing access to resources on a network. For example, U.S. Patent Application Publication No. US 2010/0325710 A1 by Etchegoyen and European Patent Application Publication No. EP 3 151 144 A1 by Enrique Salpico each
describe a method for an access point to authenticate an account identifier, password, and device identifier before authorizing access to a network resource. U.S. Patent Application Publication No. US 2016/0094531 A1 by Unnikrishnan and Nanda describes an authentication method using a challenge response to authenticate a user before allowing access to a network resource. However, there is no prior art for an access point to determine whether a device has the property that it allows authorized access by law enforcement before allowing the device to access resources on the network.

### DISCLOSURE OF INVENTION

The present invention comprises methods and apparati for permitting Computing Devices **200** to safely accept Payloads **220** from External Access Entity Devices **260,** and to safely access external Networks **710.** In an apparatus embodiment, a Computing Device **200** contains an Access Control Module **210** comprising an Access Verification Public Key **211** and a Device Signature Key **214.** The Access Control Module **210** is configured to verify authorization of an External Access Payload **220** by verifying a digital signature affixed to the Payload **220** using the Access Verification Public Key **211.** The authorized External Access Payload **220** is then permitted to execute on the Computing Device **200.** The Access Control Module **210** is also configured to receive from a Network Access Device **600** information associated with a Network **710** access request, and to create a plurality of digital signatures, using the Device Signature Key **214,** that link said information associated with the Network 710 access request with the Access Verification Public Key **211.**

### BRIEF DESCRIPTION OF THE DRAWINGS

These and other more detailed and specific objects and features of the present invention are more fully disclosed in the following specification, reference being had to the accompanying drawings, in which:
Figure 1 is an illustration of a computing device **1** that can be used in conjunction with the present invention.
Figure 2 is an illustration of an external entity accessible device **200** which is a computing device **1** with the functionality of allowing an authorized external entity to access the device **200.**
Figure 3 is an illustration of some of the functionality in an external entity accessible device **200.**
Figure 4 is an illustration of more detail of the cryptographic module **240** in an external entity accessible device **200.**
Figure 5 is an illustration of some of the functionality in cryptographic module **240.**
Figure 6 is an illustration of a policy enforcing network access point **600** that checks the external accessibility of a device **200** before allowing the device **200** access to a network.
Figure 7 is an illustration of an external entity accessible device **200** accessing a network **710** through a policy enforcing network access point **600.**
Figure 8 is an illustration of the first steps of a protocol for an external entity accessible device **200** to obtain access to a network **710** through a policy enforcing network access point **600.**
Figure 9 is an illustration of the continuation of the protocol illustrated in Figure 8.
Figure 10 is an illustration of a protocol for an external entity accessible device **200** to update the access control module **210** while in a communication session with policy enforcing network access point **600.**

### DETAILED DESCRIPTION OF PREFERRED EMBODIMENTS

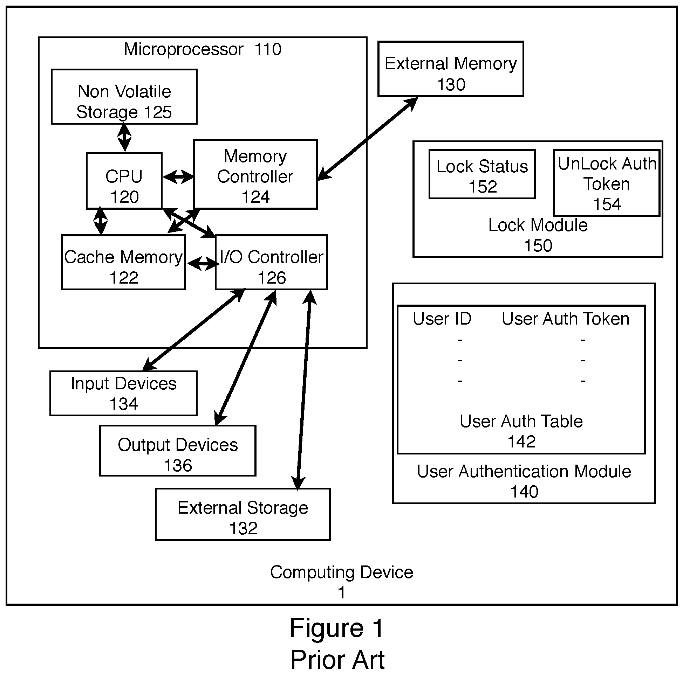

Figure 1 illustrates a computing device **1** according to some embodiments. Computing device **1** may be a hand held smart phone, a tablet, a laptop, a desktop, or a server. The computing device **1** has one or more microprocessors **110.** Each microprocessor **110** may comprise a CPU **120** to carry out the basic instructions of a computer program, cache memory **122** to store instructions and data inside the microprocessor **110,** a memory controller **124** to access memory **130** that is external to the microprocessor **110,** and an I/O Controller **126** to access other resources on the device **1,** such as external non-volatile storage **132,** one or more input devices **134,** and one or more output devices **136.** In some embodiments of the system, there are multiple microprocessors **110** in the device **1.** In some embodiments of the system, some of the microprocessors **110** serve specific purposes, such as a graphics microprocessor **110.**

In some embodiments, computing device **1** includes a user authentication module **140.** In some embodiments, the user authentication module **140** is implemented in software that executes on the microprocessor **110.** The user authentication module **140** includes a user authentication table **142,** which comprises a list of user ids, and for each user id, the user authentication token used by the user having that user id to authenticate the user when the user logs onto the system. Examples of user authentication tokens include passwords, movement patterns on an input device, and biometrics. In some embodiments, some users may have the privilege on the computing device **1** that allows the user to add additional users to the user auth table **142.** In some embodiments, computing device **1** has a lock module **150** that comprises a lock status **152** which indicates whether the device **1** is locked or unlocked, and an unlock auth token **154,** which is used to check whether a user is allowed to unlock the device **1** if the device is in a locked state. In some embodiments when a user is logged into the device **1,** the user is able to set the unlock auth token **154.** For a given user, the user may choose to make the unlock auth token **154** the same as the user auth token, or the user may choose a different auth token.

Throughout this specification, the term "user" refers to an entity that can successfully authenticate as one of the users listed in the user auth table **142,** which may require unlocking the device **1** if device **1** is in the locked state. Two entities are considered the same user if they can authenticate with the same user id. A user may choose to have a null user auth token and unlock auth token. If a user has a null user auth token and unlock auth token, any entity with physical access to the device **1** can use the device **1** as that user, and therefore is considered to be the same user. In some embodiments, a user is not a human person, but is some other entity, for example, some other device **1.**

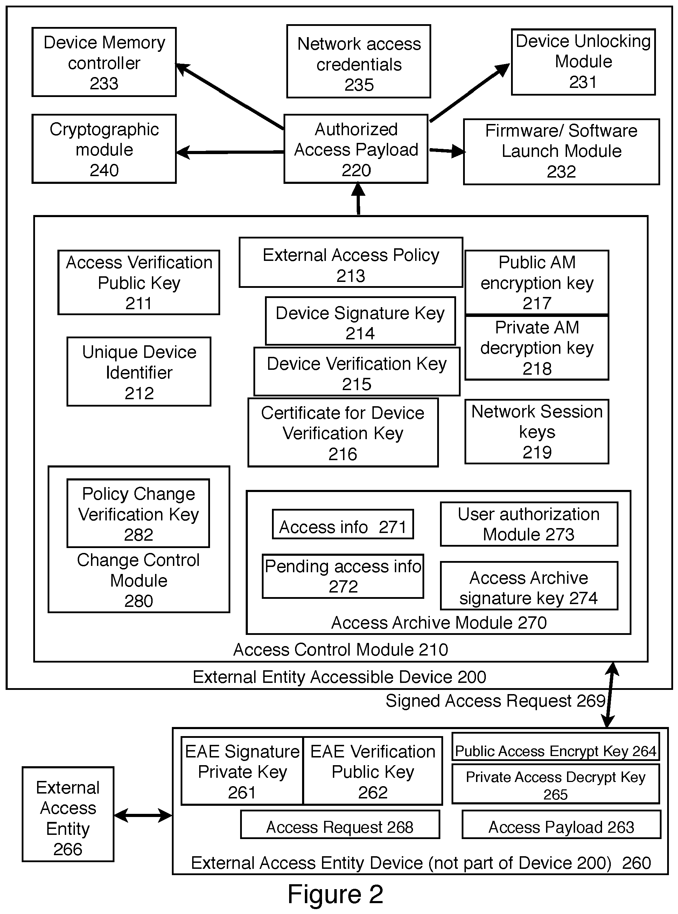

Figure 2 illustrates an embodiment of an external entity accessible device **200.** An external entity accessible device **200** includes the properties of a computing device **1.**

In some embodiments, the device **200** includes a cryptographic module **240.** A user of the device **200** uses keys in this cryptographic module **240** to encrypt information for storage on the device **200** or for communication to other devices across some network.

The external entity accessible device **200** includes an access control module **210** that is used to control the access of external entities according to the external access policy **213** of the device **200,** and to provide proof to a policy enforcing network access point or other entity of the external access capabilities and policy of the device **200.**

Figure 2 also illustrates an embodiment of an external access entity device **260** that is used by an external access entity **266** to digitally sign requests for access to an external entity accessible device **200.** An external access entity **266** is some entity other than the user of the device **200.**

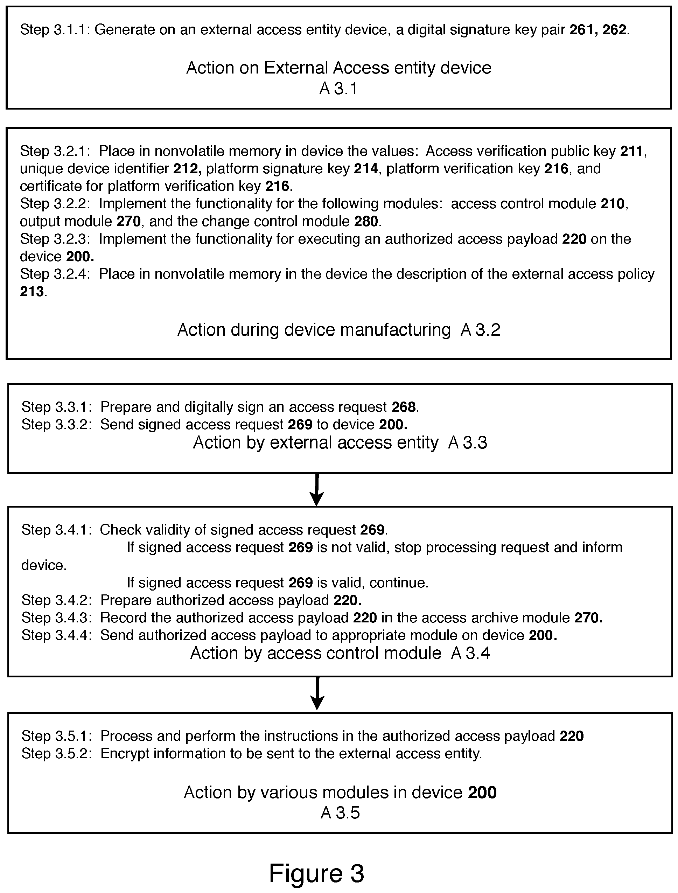

Figure 3 illustrates how the device **200** in Figure 2 is used in an embodiment. Block **A 3.1** illustrates a step that takes place prior to manufacturing of device **200.** An external access entity device **260** generates a private / public key pair for a digital signature system, specifically an external access entity signature private key **261** and an external access entity verification public key **262.**

Block **A 3.2** illustrates steps that take place during manufacturing of device **200.** An access verification public key **211** is embedded in non volatile memory in the access control module **210.** In one embodiment, the access verification public key is an external access entity verification public key **262.** In another embodiment, the access verification public key **211** in the external entity accessible device **200** is a verification public key of a certificate authority that issues certificates for a plurality of external access entity verification public keys **262.** In another embodiment, there are multiple access verification public keys **211** in the access control module **210.**

Also in step 3.2.1, a unique device identifier **212** is generated and placed on the device **200.** In some embodiments, device identifier **212** is chosen at random from a large enough set so that the probability of two devices **200** receiving the same device identifier **212** is extremely low. A digital signature key pair is generated for the device **200,** specifically a private device signature key **214** and a public device verification key **215.** A digital certificate **216** is generated for the device verification key **215.** The certificate **216** is signed by the device manufacturer, and contains information about the device **200.** In some embodiments, the certificate **216** is placed on the device **200.** In other embodiments, the certificate **216** is placed in a directory that is not contained within device **200** but is accessible to device **200.** In some embodiments, the device verification key **215** can also be used as a device identifier, instead of having a separate unique device identifier **212.**

In step 3.2.2, the device manufacturer implements the functionality for the access control module **210,** the Access Archive Module **270,** and the change control module **280.** This implementation may include hardware, firmware, and/or software by choice of the manufacturer. In step 3.2.3, the device manufacturer implements the functionality for executing an authorized access payload **220** on the device **200,** including the capabilities needed in various components throughout the device **200** needed to execute the payload **220,** such as in a device unlocking module **231,** in a firmware and/or software launch module **232,** in device memory controller **233,** and/or in a plurality of cryptographic modules **240.** This implementation may include hardware, firmware, and/or software by choice of the manufacturer.

In step 3.2.4, the device manufacturer stores in nonvolatile memory in the device **200** a description of the external access policy **213** of device **200.** In some embodiments, the external access policy **213** is not stored on the device **200,** but is stored elsewhere, and an identifier for the external access policy **213** is stored on the device **200.** In some embodiments, this identifier for the external access policy **213** is identified in the certificate **216** for the device verification key **215.** The external access policy **213** describes the types of payloads **220** that are allowed on the device **200.** In one embodiment, the external access policy **213** allows any payload **220** that can be executed on the device **200.** In some embodiments, the external access policy **213** describes what types of unlocking capabilities are available to an authorized external access entity **266.** In some embodiments, the external access policy **213** describes the capabilities of the firmware or software that can be launched by an authorized external access entity **266.** In some embodiments, the external access policy **213** describes what cryptographic keys are allowed to be requested in payloads **220.** The external access policy **213** also describes the capabilities of the access archive module **270,** and the change control module **280.**

In some embodiments, the device **200** has multiple partitions for executing software, and enforces different policies on the different partitions regarding what software can execute and what external access is permitted. The description of these policies are included in the external access policy **213.**

In some embodiments, no changes are allowed to the external access policy **213** or to any functionality in the device **200** that would invalidate any of the descriptions in the external access policy **213.** In this case, a change control module **280** is not needed. In other embodiments, changes are allowed to the external access policy **213** and to the corresponding functionality in the device **200** that is included in the description of the external access policy **213.** In this case, the change control module **280** controls the authorization for such changes. In these embodiments, no change is allowed in the external access policy **213** or to any functionality in the device **200** that is included in the description in the external access policy **213** unless that change is approved by the change control module **280.**

In some embodiments, the access control module **210** is executed in a partition that is protected from other software executing on device **200.** In this way, changes can be made to the functionality of software executing outside of the partition with the access control module **210** without needing approval from the change control module **280.** In one embodiment, the access control module **210** executes on a separate microprocessor having its own memory and a secured launch of the access control module **210** software. In other embodiments, the access control module **210** executes in a trusted execution environment.

The next action in Figure 3 is shown in block A 3.3. This action occurs after the external access entity **266** decides to access the device **200.** In an anticipated use of this invention, the external access entity **266** is obligated to obtain legal authorization before using the capability to access the device **200.** In step 3.3.1, the external access entity **266** prepares an access request **268** containing an access payload **263** and the unique device identifier **212** of the targeted device **200.** In some embodiments, the external access entity device **260** generates an access encryption key pair, specifically, a public access encryption key **264** and a private access decryption key **265.** The public access encryption key **264** is included in the access payload **263.** The external access entity device **260** digitally signs this request **268** with the external access entity signature private key **261.** In one embodiment, the signed access request **269** is provided directly to the device **200.** In another embodiment, the signed access request **269** is provided to some other entity which provides it to device **200,** perhaps at some future time. The future time may or may not be selected in advance.

In action A 3.4 in Figure 3, the device **200** processes the received signed access request **269** in the access control module **210.** In step 3.4.1, the access control module **210** checks the validity of the signed access request **269.** The access control module **210** checks that the digital signature on the request **269** is valid using the access verification public key **211.** This check may involve checking the digital signatures of digital certificates in a certificate hierarchy when the access verification public key **211** is the public key of a certificate authority. If this digital signature is valid, the access control module **210** also checks that the unique device identifier in the access request **268** matches the unique device identifier **212** of the device **200.** If that check is valid, the access control module **210** also checks that the access payload **263** in the access request **268** is consistent with the external access policy **213** of the device **200.** If the access request **268** fails any of these checks, the access control module **210** informs the device **200** that the access request is invalid. In some embodiments, that includes stopping the thread of execution of the access control module **210.** If all of the checks pass, the access control module **210** proceeds to step 3.4.2, where the access control module **210** prepares an authorized access payload **220** derived from the access payload **263.**

In some embodiments, the access control module **210** includes an access archive module **270.** In Step 3.4.3, information about the authorized access payload **220** is stored in the access archive module **270.** In some embodiments, this information is stored in access info **271,** which is non volatile storage **125** available to the access archive module **270.** In some embodiments, the access info **271** comprises the number of times that an authorized access payload **220** has been produced by access control module **210.** In some embodiments, the access info **271** includes a hash chain derived from previous authorized access payloads **220.** In some embodiments, any information from an authorized access payload **220** is not included in real time in access info **271,** but is stored temporarily in pending access info **272,** and added to access info **271** after the passage of some specified time. In some embodiments, upon a request, the access archive module **270** outputs the Access Info **271.** In some embodiments, the Access Archive Module **270** also provides a digital signature of the access info **271** using an access archive signature key **274.** In some embodiments, this signed message may also include the unique device identifier **212.** In some embodiments, the user provides a randomly generated Nonce, and the access archive module **270** includes the Nonce in the signed message. In some embodiments, the access archive module **270** requires a successful user authentication, including a success message from a user authentication module **273** before access info **271** is released to any other module.

In Step 3.4.4, the authorized access payload **220** is sent from the access control module **210** to an appropriate recipient module on device **200.** In step 3.5.1, the module that receives the authorized access payload **220** processes the authorized access payload **220,** and performs the instructions in the authorized access payload **220.** The following paragraphs describe several embodiments implemented by modules in the device **200** that receive an authorized access payload **220.** For each of theses modules, processing the instructions in the authorized access payload **220** sometimes results in information that needs to be sent securely back to the external access entity **266.** In Step 3.5.2, this information is encrypted using the public access encrypt key **264** and sent to the external access entity device **260.**

In some embodiments, the authorized access payload **220** is sent to the device unlocking module **231,** and the payload **220** contains instructions to modify the functionality of the device unlocking module **231** to allow an external access entity **266** to feasibly unlock the device **200** without knowing the device unlocking password chosen by the user of the device **200.** In some embodiments, the authorized access payload **220** is sent to a firmware or software launch module **232,** and payload **220** contains instructions to the firmware or software launch module **232** to launch different firmware or software than the module **232** normally would launch, or to modify the firmware or software that is launched on the device **200.** In some embodiments, the authorized access payload **220** is sent to a device memory controller module **233,** and payload **220** contains instructions to modify device **200** memory with respect to firmware or software that has already been launched on the device **220,** or to retrieve data stored in device **200** memory. In some embodiments, the authorized access payload **220** places instructions in device **200** memory that are executed to retrieve information from device **200** memory and to provide that information to the external access entity **266.**

In some embodiments, the authorized access payload **220** is sent to a cryptographic module **240,** and payload **220** contains instructions to modify the functionality of the cryptographic module **240** on the device **200,** so that the external access entity **266** is able to decrypt messages encrypted with a cryptographic key used in the cryptographic module **240.**

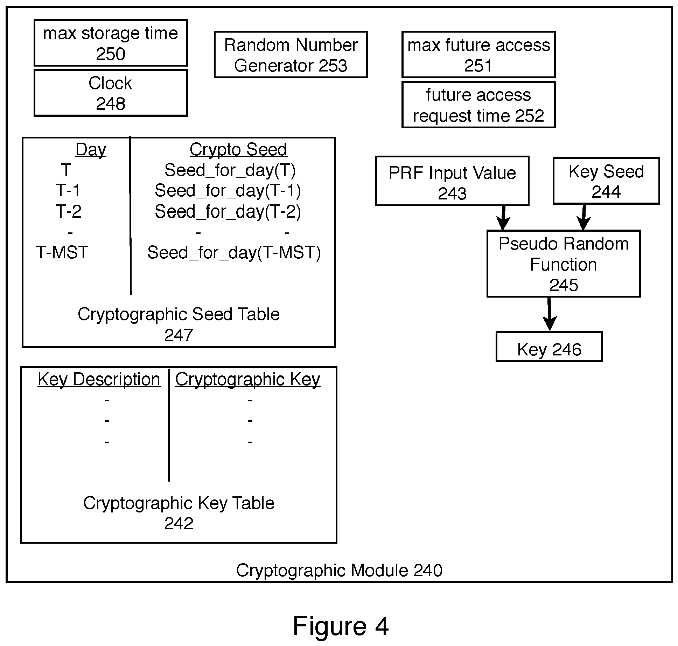

Figure 4 provides a more detailed view of the cryptographic module **240.** In some embodiments, the cryptographic module **240** has a plurality of keys stored in a cryptographic key table **242,** each key having an index or key description. In some embodiments, the authorized access payload **220** includes a key description, and the cryptographic module **240** responds with the corresponding cryptographic key in table **242** if there is a matching key with that description.

In some embodiments, the cryptographic module **240** contains a cryptographic pseudo random function **245,** which takes as input a key seed **244,** and another PRF input value **243,** and produces a key **246.** In one embodiment, the key seed **244** is kept constant for some period of time, and the PRF input value **243** is derived from the key description for each key. In this embodiment, the cryptographic module **240** provides the external access entity **266** with the key seed **244.** By using the key seed **244** and the PRF input value **243,** the external access entity **266** can compute any cryptographic key in the cryptographic key table **242** for the period of time when the same key seed **244** is in use for which the external access entity **266** knows the key description, and thus knows the PRF input value **243.**

In some embodiments, the cryptographic module **240** has access to a clock **248.** In some embodiments, it is desirable for this to be a secure clock **248,** so that the clock **248** is synced with a trusted time source periodically or whenever the clock **248** loses power.

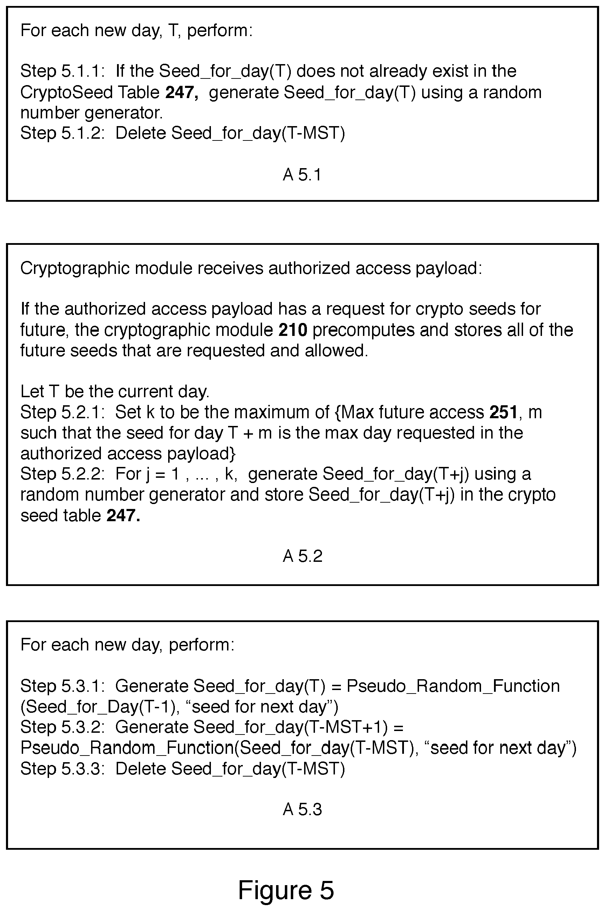

Figure 5 illustrates one embodiment of the use of cryptographic seeds **244** for generating and storing keys used in the cryptographic module **240.** The description in Figure 5 uses a time period of a day, but other time periods are used in other embodiments. There is a maximum storage time (MST) **250** stored in the cryptographic module **240.** There is a cryptographic seed table **247** for storing the key seeds **244** for each day.

For each new day T, the cryptographic module **240** performs action A 5.1. In step 5.1.1, the cryptographic module **240** checks to see if it already has a crypto seed **244** for day T stored in the crypto seed table **247.** If not, it generates a seed **244** for the day T and adds it to the crypto seed table **247** as Seed_for_day(T). In step 5.1.2, the cryptographic module **240** deletes the Seed for_Day(T-MST). In this embodiment, the authorized access payload **220** can include a request for the entries in the crypto seed table **247** for seeds **244** for the day for numerous days, including the current day and days in the past. The cryptographic module **240** can provide the seeds **244** for the requested days, but not any day prior to the current day minus the maximum storage time **250.**

In some embodiments, the cryptographic module **240** allows the external access entity **266** to receive crypto seeds **244** that will be used in the future. The cryptographic module **240** has a limit, the maximum future access **251,** on how far in the future it will provide crypto seeds **244.** This embodiment is described in action A 5.2. Suppose that the cryptographic module **240** has received an authorized access payload **220** that requests crypto seeds **244** that will be used in the future. The cryptographic module **240** generates the requested seeds **244** and stores them in the crypto seed table **247.** Let M be the maximum of the set {m such that the seed for day T+m is requested in the authorized access payload **220**}. Step 5.2.1 computes k as the maximum of M and max future access **251.** Step 5.2.2 generates the Seed_for_day (T+j) for each j starting with 1, and up to k. These seeds **244** are generated using a random number generator **253,** and are stored in the crypto seed table **247.**

Figure 5 also illustrates an alternate embodiment for the use of cryptographic seeds **244** in generating and storing keys used in the cryptographic module **240.** This is described in action **A 5.3.** In one embodiment, for each new day T, in step 5.3.1, the cryptographic module generates a new Seed for_Day (T) **247** using the Pseudo_random function **245** by using the previous day's seed, Seed_for_Day(T-1) as the key seed **244,** and the name "seed for next day" as the Pseudo_random function input value **243.** In this embodiment, the cryptographic module **240** needs to store only the values of the seed for_ day(T) and Seed_for_Day (T - MST + 1) in the table **247.** This is because any of the missing seeds between T and T-MST+1 can be recomputed starting with the Seed_for_Day(T-MST+1), since the Pseudo Random Function **245** is known, and the PRF input value = "seed for next day" is known.

For the new day T, the cryptographic module **240** computes in step 5.3.2 the new value of Seed for_Day (T-MST+1) using the Pseudo_random function **245,** by using the day T-MST seed, Seed for_Day(T-MST) as the key seed **244,** and the name "seed for next day" as the Pseudo_random function input value **243** In this embodiment, if the authorized access payload **220** includes a request for the seed for day T-k for some value of k < MST, the cryptographic module **240** computes that seed **244,** and provides it to the external access entity **266.** The external access entity **266** can compute the key seed **244** for each day starting with day T-k. The external access entity **266** can also compute key seeds **244** into the future.

In one embodiment, it is desirable to have a limit on the number of days in the future for the external access entity **266** to have access. In this embodiment, there is a value in the cryptographic module **240** called max future access **251** for the maximum number of days in the future for which key seeds **244** can be provided. In the authorized access payload **220,** there is an additional value, the future access request time **252.** After a period of time has passed since the external access request was validated, so that the current day T is larger than the minimum of {future access request value **252,** max future access value **251**}, the cryptographic module **240** generates the seed_for_day (T) using a random number generator that is independent of the seeds **244** for any previous days. In this manner, the external access entity **266** is not able to obtain access to the keys in the future beyond day T for this cryptographic module **240** without making another access request.

In one embodiment, the cryptographic module **240** mixes in additional randomness into the seeds **244.** In one embodiment, this is performed every 100th day. Every 1 00th day, instead of performing the step 5.3.1, the cryptographic module **240** generates Seed_for_day(T) using a random number generator. The Seed_for_day(T) generated using a random number generator is stored in the cryptographic seed table **247** until it is deleted in step 5.3.3 because MST additional days have passed. The Seed_for_day(T) generated using a random number generator is not regenerated in step 5.3.2.

In some embodiments, the time period of a day is replaced by some other time period.

In some embodiments, the device **200** encrypts information using the public access encrypt key **264** prior to sending that information to the external access entity **266.**

In some embodiments, the access request **268** is encrypted.

In some embodiments, functionality in the cryptographic module **240** is protected from modification from any software that can be installed on device **200.** In some embodiments, the cryptographic module **240** is executed in a partition that is resistant to software modifications.

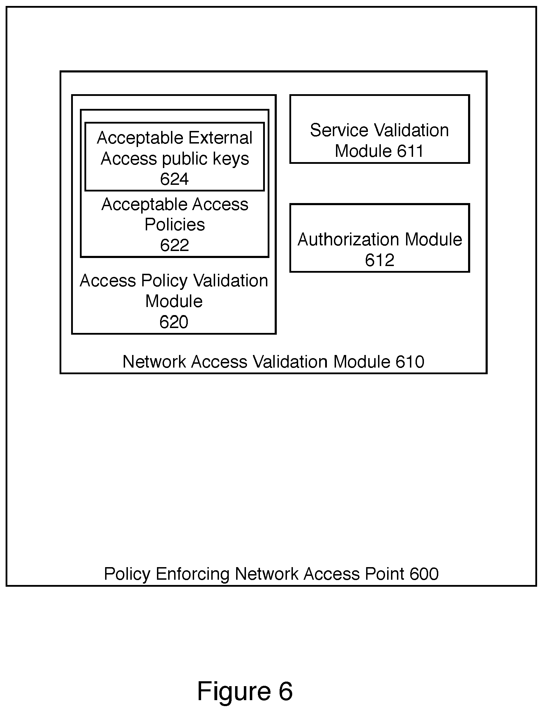

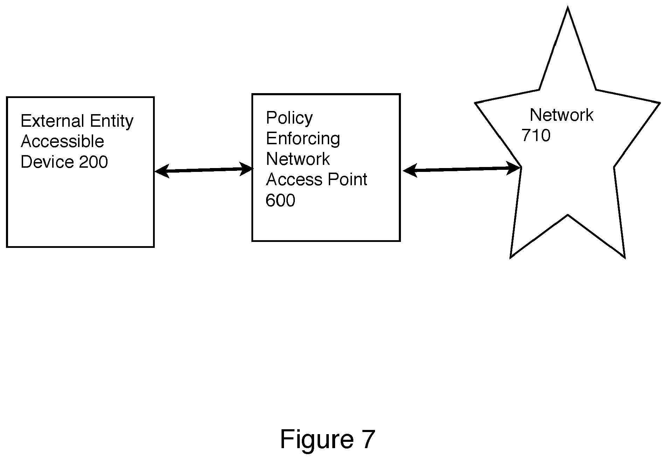

Figure 6 shows an embodiment of a policy enforcing network access point **600.** As shown in Figure 7, the policy enforcing network access point **600** provides a service to connect a device **200** to some network **710,** such as the Internet. The policy enforcing network access point **600** includes a network access validation module **610** that makes a decision about whether to allow a device **200** to connect to some network **710.** In some embodiments, the network access validation module **610** contains a service validation module **611** that checks whether a computing device **200** has a valid service agreement. For example, if the policy enforcing network access point **600** were a wireless access point owned by a cellular wireless carrier, the service validation module **611** may check whether the device **200** requesting service had a valid service agreement with the cellular wireless carrier. In some embodiments, the network access validation module **610** contains an authorization module **612,** that checks whether a computing device **200** has credentials that allow it to connect to some network **710.** For example, a policy enforcing network access point **600** in a home may have a WIFI password, and the policy enforcing network access point **600** may check that a computing device **200** knows this WIFI password.

In an embodiment of the current invention, the network access validation module **610** contains an access policy validation module **620** that checks whether a computing device **200** has a satisfactory capability for providing an external entity to access the computing device **200.** The access policy validation module **620** contains a set of acceptable external access public keys **624.** In some embodiments, this set **624** contains public keys of certificate authorities and a description of the types of digital certificates issued by those certificate authorities that are acceptable. In such an embodiment, a public key in a certificate that was issued by one of those certificate authorities and of an acceptable type is considered to be in the set of acceptable external access public keys **624.** The access policy validation module **620** also contains a set of acceptable access policies **622.** Some acceptable external access public keys **624** are Any_Policy_AEAPK. Specifically, any external access policy **213** on a device **200** where the access verification public key **211** is one of the Any_Policy_AEAPK is an acceptable access policy **622.** Other acceptable external access public keys **624** are Not Any_Policy_AEAPK. For an Not Any_Policy_AEAPK, the acceptable access policies **622** includes information to determine whether an external access policy **213** on a device **200** where the access verification public key **211** is one of the Not Any_Policy_AEAPK is an acceptable access policy **622.**

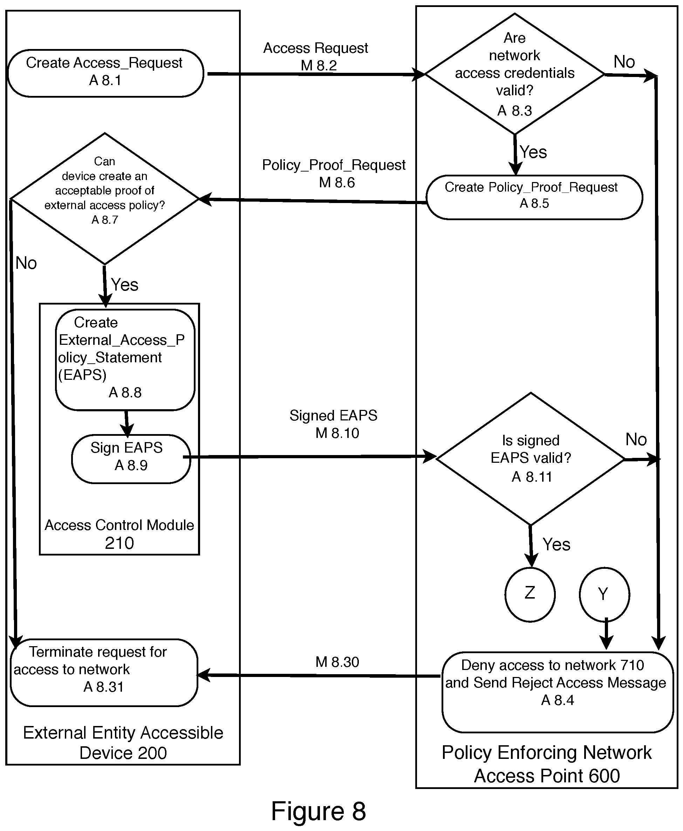

Figure 8 presents an embodiment of a protocol for how a policy enforcing network access point **600** uses its capabilities to determine if a computing device **200** is allowed access to a network **710** accessible by the policy enforcing network access point **600.**

In action **A 8.1,** a computing device **200** creates an Access_Request to start the process of gaining access to the network **710** through the policy enforcing network access point **600.** In some embodiments, the Access_Request includes the device ID **212** of the device **200** and network access credentials **235** of the device **200.**

In message **M 8.2,** the device **200** sends the Access_Request to the policy enforcing network access point **600** to request access to the network **710.** In some embodiments, the access request message **M 8.2** and other communications between the device **200** and the policy enforcing network access point **600** use network session keys **219** with common cryptographic protocols for security. In some embodiments, a protocol such as TLS is used to provide for privacy of the communications, and to assure that all of the communications are from the same device **200.** In some embodiments, some of the session keys **219** used for secure communications are held securely in the access control module **210** of the device **200,** so that the communication session cannot be feasibly transferred to another device. The session keys **219** are also used as an indicator that the device 200 is in an active communication session with a policy enforcing network access point **600.** The session keys **219** are deleted when the device **200** terminates the communication session with the policy enforcing network access point **600.**

The policy enforcing network access point **600** receives the Access_Request, and in action **A 8.3** evaluates the network access credentials **235** to determine if credentials **235** are valid. In some embodiments, the access request and evaluation of network access credentials **235** may involve multiple messages between the device **200** and the policy enforcing network access point **600.** In some embodiments, the evaluation of the network access credentials **235** at action **A 8.3** includes an evaluation by the service validation module **611** to determine if the device **200** has a valid service contract for accessing network **710.** In some embodiments, the evaluation of the network access credentials **235** includes an evaluation by the authorization module **612** to see if device **200** has authorization for accessing network **710.** If the policy enforcing network access point **600** determines that the network access credentials **235** are not valid, the policy enforcing network access point **600** proceeds to action **A 8.4** to send a reject access message **M 8.30** to device **200,** and to deny device **200** access to the network **710.** If the policy enforcing network access point **600** determines that the network access credentials **235** are valid, the policy enforcing network access point **600** proceeds to action **A 8.5.**

In action **A 8.5,** policy enforcing network access point **600** creates a Policy_Proof_Request. This is a request for the access control module **210** of device **200** to provide a proof of the external access policy **213** of device **200,** so that the policy enforcing network access point **600** is able to determine in action A 8.11 whether the external access policy **213** of the device **200** satisfies the acceptable access policies **622** of the policy enforcing network access point **600.** In some embodiments, the Policy_Proof_Request includes a NONCE (a random value generated by the policy enforcing network access point **600**) and a description of acceptable external access policies **622.** In some embodiments, the Policy_Proof_Request is digitally signed by the policy enforcing network access point **600.**

The Policy_Proof_Request is sent to device **200** in message **M 8.6.**

In action **A 8.7,** the device **200** evaluates the Policy_Proof_Request to determine if the device **200** can create an acceptable proof. In some embodiments, action **A 8.7** is performed in the access control module **210** of device **200.** In other embodiments, action **A 8.7** is performed in other modules of device 200. If the device **200** determines that it cannot create an acceptable proof of satisfying the external access policy, the device **200** proceeds to action **A 8.31,** and terminates the request for access. Otherwise the device **200** proceeds to action **A 8.8** to create the External Access_Policy_Statement.

In action **A 8.8,** the access control module **210** of device **200** creates an External Access_Policy_Statement (EAPS). In one embodiment, the External Access_Policy_Statement includes: the NONCE sent in the Policy_Proof_Request; unique device identifier **212;** a description or identifier of parts of the external access policy **213** of the device **200;** an access verification public key **211** in the access control module **210** of device **200;** and a public encryption key **217** corresponding to a private decryption key **218** controlled by the access control module **210.** In some embodiments, the External Access_Policy_Statement includes one or more of the following items: the NONCE sent in the Policy_Proof_Request; a cryptographic hash of the Policy_Proof_Request; the unique device identifier **212;** a description or identifier of parts of the external access policy **213** of the device **200;** an access verification public key **211** in the access control module **210** of device **200;** an assertion that the external access policy **213** in device **200** meets the description of acceptable external access policies **622** sent in the Policy_Proof_Request; and a public Access Module encryption key **217** corresponding to a private Access Module decryption key **218** controlled by the access control module **210.** In some embodiments, the digital certificate **216** for the device verification key **215** references some of the items listed above: the unique device identifier **212;** a description or identifier of parts of the external access policy **213** of the device **200;** and an access verification public key **211** in the access control module **210** of device **200.** There is no requirement to duplicate items in the certificate **216** and in the EAPS.

The access control module **210** of device **200** proceeds to action **A 8.9.** In action **A 8.9,** the access control module **210** of device **200** digitally signs the External Access_Policy_Statement with the device signature key **214.** In some embodiments, the access control module **210** stores the EAPS while the device **200** is in the communication session with the policy enforcing network access point **600.**

In message **M 8.10,** the external entity accessible device **200** sends the External Access_Policy_Statement, the digital signature of the External Access_Policy_Statement, and the digital certificate **216** for the device **200** verification key **215** to the policy enforcing network access point **600.** In some embodiments, the policy enforcing network access point **600** obtains the certificate **216** through some other means, and therefore said certificate **216** doesn't need to be included in message **M 8.10.**

The combination of the EAPS, the digital signature on the EAPS by the device signature key **214,** the digital certificate for the device verification key **216,** and message **M 8.10** link information associated with the Access_Request and the device verification public key **215.** Information associated with the Access_Request includes the NONCE, the cryptographic hash of the Policy_Proof_Request, and the use of the TLS session keys **219** for sending message **M 8.10.**

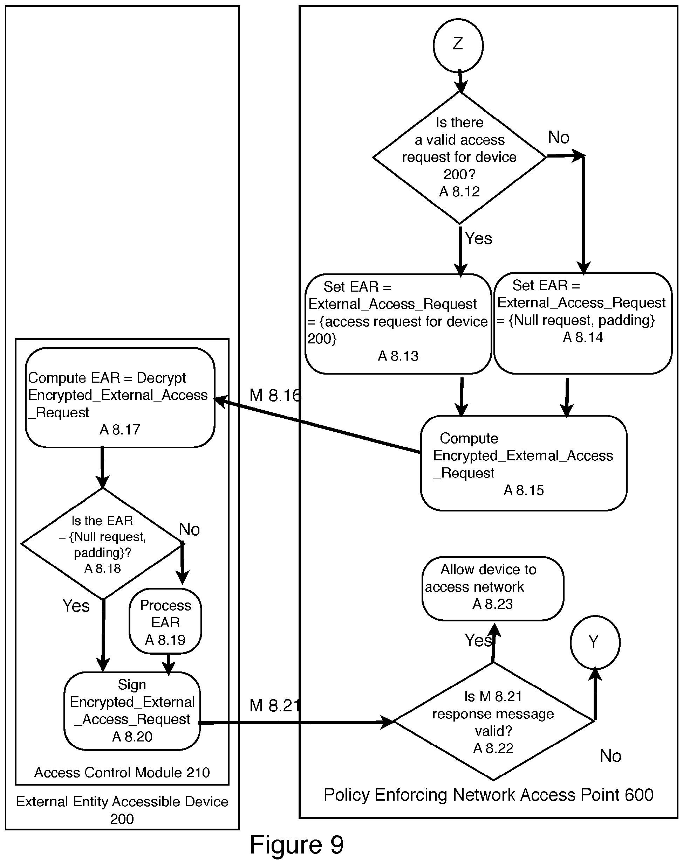

In Action **A 8.11,** the policy enforcing network access point **600** checks the validity of the External Access_Policy_Statement and the digital signature on the External Access_Policy_Statement. In some embodiments, this checking includes: validating a digital certificate **216** for the device verification key **215;** validating the digital signature on the External Access_Policy_Statement using the device verification key **215;** checking that the NONCE in the External Access_Policy_Statement is the same as the NONCE sent to the device **200** in the Policy_Proof_Request; having the access policy validation module **620** check whether the access verification public key **211** is in the set of acceptable external access public keys **624;** and checking that the external access policy **213** is in the set of acceptable access policies **622.** If any of these checks fail, the policy enforcing network access point **600** proceeds to action **A 8.4** to send a reject access message **M 8.30** to device **200,** and to deny device **200** access to the network **710.** If all of the checks pass, this indicates that the device **200** has established satisfaction with the acceptable access policies **622,** and the policy enforcing network access point **600** proceeds to action **A 8.12** (see Figure 9).

In the Figures, action **A 8.12** appears at the top of Figure 9. In Action **A 8.12,** the policy enforcing network access point **600** checks to see if there is a valid request for access for device **200.** In some embodiments, checking that a request for access is valid includes checking that the request includes the unique device identifier **212,** and that the request has a digital signature that can be verified by the device embedded verification public key **211.** In some embodiments, checking that a request for access is valid includes checking whether there is a time window for validity of the request, and whether the current time is within that time window. In some embodiments, the policy enforcing network access point **600** uses the unique device identifier **212** to search for such a request. In some embodiments, the policy enforcing network access point **600** searches a database where access requests are stored. In some embodiments, the policy enforcing network access point **600** contacts another entity to find out if there are any access requests for device **200.** If the policy enforcing network access point **600** finds an access request for device **200,** and a digital signature on the access request can verified by the access verification public key **211,** the policy enforcing network access point **600** proceeds to action **A 8.13** and sets the value of External Access_Request to be that access request and the digital signature on the access request. If the policy enforcing network access point **600** does not find a properly signed access request for device **200,** the policy enforcing network access point **600** proceeds to action **A 8.14,** and sets the value of External Access_Request to be Null request. In some embodiments, the Null request is padded with sufficient random bits so that the length of the External Access_Request is the same whether or not it was computed in action **A 8.13** or action A **8.14.**

The policy enforcing network access point **600** proceeds to action **A 8.15,** and computes the encryption of the External Access_Request with the public AM encryption key 217. In some embodiments, a known cryptographic protocol is used for this encryption, such as generating a symmetric key *SYM_KEY,* encrypting the External Access_Request with *SYM_KEY* using a symmetric encryption algorithm such as AES, and encrypting *SYM_KEY* with the public AM encryption key **217.**

The policy enforcing network access point **600** sends the Encrypted_External Access_Request to the device **200** in message **M 8.16.**

In action **A 8.17,** the access control module **210** of device **200** computes the External Access_Request (EAR) by decrypting the Encrypted_External Access_Request using the private AM decryption key **218.**

The access control module **210** proceeds to action **A 8.18,** where module **210** checks to see if the External Access_Request is the Null request or not.

If the External Access_Request is the Null request, the access control module **210** proceeds to action **A 8.20.**

If the External Access_Request is not the Null request, the access control module **210** proceeds to action **A 8.19** where it processes the External Access_Request. Processing the External Access_Request was described earlier in this specification in the description of Figures 2, 3,4, and 5. After the access control module **210** has completed processing the External Access_Request, the access control module **210** proceeds to action **A 8.20.**

In action **A 8.20,** the access control module **210** digitally signs the Encrypted_External Access_Request with the device signature key **214.** In some embodiments, the message signed in action **A 8.20** is a message computed from some portion of the External Access_Request.

In message **M 8.21,** the device **200** sends the digital signature of the Encrypted_ External Access_Request to the policy enforcing network access point **600.** In some embodiments, message **M 8.21** also includes the Encrypted_External Access_Request.

In action **A 8.22,** the policy enforcing network access point **600** checks validity of the message **M 8.21.** In some embodiments, this includes validating the digital signature on the Encrypted_ External Access_Request. In some embodiments, this checking includes: validating a digital certificate **216** for the device verification key **215;** and validating the digital signature on the Encrypted_ External Access_Request using the device verification key **215.** If the response message **M 8.21** fails the validity checks, the policy enforcing network access point **600** proceeds to action **A 8.4** (see Figure 8), sends a reject access message **M 8.30** to the device **200,** and denies device **200** access to the network **710.**

If the policy enforcing network access point **600** successfully validates the message **M 8.21,** the policy enforcing network access point **600** proceeds to action **A 8.23,** and allows the device **200** access to the network **710.**

If the device **200** receives a reject access message as illustrated in message **M 8.30,** the device **200** terminates its request to access network **710.**

In some embodiments, the process described in Figure 9 is repeated periodically while the device **200** is connected to the network **710.** In some embodiments, the process described in Figure 9 is repeated if the policy enforcing network access point **600** receives a valid access request while the device **200** is connected to the network **710.** In some embodiments, the device **200** is allowed to remain connected to the network **710** while the process described in Figure 8 is performed, and if the check performed on message **M 8.21** in action **8.22** of the validity of the response message fails, the device **200** access to the network **710** is terminated.

In some embodiments, there are no changes allowed to the access control module **210** during a connectivity session with the network access device **600,** when such a change affects the validity of the External Access_Policy_Statement signed and provided to the policy enforcing network access point **600** in message **M 8.10** shown in Figure 8.

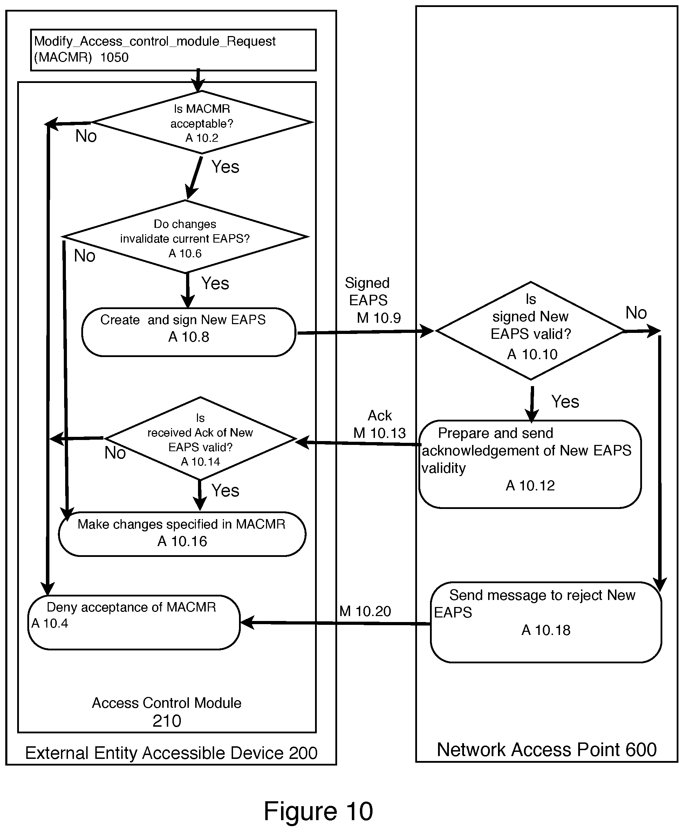

In some embodiments, the change control module **280** does allow changes in the access control module **210** during a connectivity session with the network access device **600,** even when such a change affects the validity of the External Access_Policy_Statement signed and provided to the policy enforcing network access point **600** in message **M 8.10s.** Figure 10 illustrates such an embodiment.

A Modify_Access control_module_request (MACMR) is created in block **1050.** In one embodiment, the MACMR is digitally signed by a policy change signature key, which is the digital signature key portion of a digital signature key pair corresponding to a policy change verification key **282** which is in the change control module **280.** The MACMR and digital signature are sent to the change control module **280.**

In action **A 10.2,** the change control module **280** checks whether the MACMR is acceptable. In one embodiment, this acceptability check includes checking whether the digital signature on the MACMR is valid, using the policy change verification key **282.** In one embodiment, the acceptability check is different if the device **200** is currently in a session with a policy enforcing network access point **600.** If the acceptability checks do not pass, in action **A 10.4** the access control module **210** does not make any changes, and responds to the MACMR with a deny acceptance response. If the acceptability checks do pass, the access control module **210** continues to action **A 10.6.**

In action **A 10.6,** the change control module **280** checks to see if the device **200** is in a current session with a policy enforcing network access point **600,** and if so, examines the current EAPS that was signed in action A **8.9.** If the changes requested in the MACMR do not invalidate the EAPS, or if the device **200** is not currently is a session with a policy enforcing network access point **600,** the access control module **210** proceeds to action **A 10.16,** and makes the changes requested in the MACMR, including any necessary changes to the external access policy **213.** If the changes requested in the MACMR do invalidate the current EAPS, the access control module **210** proceeds to action **A 10.8.**

In action **A 10.8,** the access control module **210** creates a new EAPS consistent with the MACMR. The access control module **210** digitally signs the new EAPS with the device signature key **214.**

In message **M 10.9,** the external entity accessible device **200** sends the new EAPS and the digital signature of the new EAPS to the policy enforcing network access point **600.** In some embodiments, the message **M 10.9** includes a digital certificate **216** for the device verification key **215.**

In action **A 10.10,** the policy enforcing network access point **600** checks the validity of the EAPS and the digital signature on the EAPS. If these validity checks do not pass, the policy enforcing network access point **600** proceeds to action **A 10.18** to send a message **M 10.20** to the device **200** indicating that the policy enforcing network access point **600** did not accept the new EAPS. If these validity checks do pass, the policy enforcing network access point **600** proceeds to action **A 10.12.**

In action **A 10.12,** the policy enforcing network access point **600** prepares an acknowledgement (Ack) of acceptance of the new EAPS. In message **M 10.13,** this Ack is sent to the access control module **210.**

In action **A 10.14,** the access control module **210** checks if the received Ack is valid. If the received Ack is valid, the access control module **210** proceeds to action **A 10.16,** and makes the changes requested in the MACMR, including any necessary changes to the external access policy **213.** If the received Ack is not valid, the access control module proceeds to action **A 10.4.**

In action **A 10.4,** the access control module **210** does not make any changes, and responds to the MACMR with a deny acceptance response.

Particular aspects of the subject matter disclosed herein are now set out in the following numbered clauses:
1. A method for assuring that a computing device meets preselected requirements of external accessibility before allowing the computing device to access an external network, said method comprising the steps of a policy network access point: receiving from the computing device a proof of establishing satisfaction of external accessibility requirements set by the policy enforcing network access point; checking validity of the proof; and granting the computing device access to the external network when the proof has been validated.
2. The method of clause 1, wherein the external accessibility requirements comprise: the computing device validating authorization of an external access payload, by verifying a digital signature affixed to the payload; and the computing device permitting the authorized external access payload to execute on the computing device.
3. The method of clause 1, wherein satisfaction of the external accessibility requirements comprises satisfaction of one of the following two rules: there is no software-only method for modifying external accessibility capabilities of the computing device; there is a method to assure that when the computing device is coupled to the external network, the policy enforcing network access point is informed when external accessibility capabilities of the computing device are modified through software such that the computing device no longer satisfies the external accessibility requirements.
4. A computing device having an access control module comprising a verification public key and a computing device signature key, said access control module configured to: verify authorization of an external access payload, by verifying a digital signature affixed to the payload using the verification public key; permit the external access payload to execute on the computing device when the external access payload has been authorized; receive from a network access device information associated with a network access request lodged by the computing device; and create a plurality of digital signatures, using the computing device signature key, linking said information associated with the network access request with the verification public key, whereby granting the network access request is facilitated.
5. The computing device of clause 4, wherein the payload's digital signature used to verify authorization of the external access payload is not generated on the computing device.
6. The computing device of clause 4, wherein creating a plurality of digital signatures using the computing device signature key comprises using the computing device signature key to digitally sign a message comprising information derived from said information associated with the network access request.
7. The computing device of clause 4, wherein creating a plurality of digital signatures using the computing device signature key comprises one of the following: using the computing device signature key to digitally sign a message comprising information derived from the verification public key; providing a digital certificate for a computing device verification key; wherein: the digital certificate references the verification public key; and the computing device verification key and the computing device signature key are a public/private key pair in a digital signature system.
8. The computing device of clause 4, wherein said access control module further comprises: an access archive module configured to record any external access payload authorized by the access control module, wherein: a record stored in the access archive module cannot be modified or deleted by any authorized external access payload; and the access archive module is further configured to output a record of any authorized external access payload.
9. The computing device of clause 4, wherein the access control module is further configured to implement one of the following two rules: prevent any software-only method from reducing external accessibility capabilities of the computing device; assure that when the computing device is coupled to the network access device, the access control module informs the network access device when external accessibility capabilities of the computing device are modified through software such that the computing device no longer meets the requirements for external accessibility established by the network access device.
10. A policy enforcing network access point comprising an access policy validation module configured to determine whether an external access policy is acceptably configured to: receive a request from a computing device to access an external network; receive from the computing device a proof of satisfying external access policy; validate the proof of satisfying external access policy received from the computing device; and restrict access to the external network when the proof of satisfying external access policy is not acceptable.
11. The policy enforcing network access point of clause 10, wherein: the access policy validation module further comprises a set of acceptable access verification public keys; the proof of satisfying external access policy received from the computing device comprises reference to an access verification public key used by the computing device; and the validation of the proof comprises checking whether the access verification public key referenced in the proof is contained in the set of acceptable access verification public keys.
12. The policy enforcing network access point of clause 10, wherein the validation of the proof of satisfying external access policy comprises verifying a digital signature.
13. A computing device operated by a user of the computing device, said computing device comprising: an access control module configured to authorize an external access entity to access a cryptographic module, wherein: said authorization comprises verifying a digital signature affixed by the external access entity; the external access entity is not the user; the cryptographic module is configured to use keys in cryptographic computations, and to store keys for a period of time commencing with use of the keys by the computing device and ending at a time after the keys have been used; and the cryptographic module is further configured to provide access to stored keys to an external access entity authorized by the access control module.
14. The computing device of clause 13, further comprising: an access archive module configured to record any authorized access of the cryptographic module by an external access entity, wherein a record stored in the access archive module cannot be modified or deleted by an authorized external access entity; and the access archive module is further configured to output recorded information pertaining to authorized access by an external access entity.
15. The computing device of clause 13, wherein: the cryptographic module comprises a verification public key; and no digital signatures verified by the verification public key are generated on the computing device.
16. The computing device of clause 13, wherein the cryptographic module is further configured to provide access to stored keys that were previously used in a specified previous time window.
17. The computing device of clause 13, wherein the user is not able to use software to prevent an authorized external access entity from obtaining any of the stored keys.
18. The computing device of claim 13, wherein the cryptographic module is further configured to: generate and store future keys to be used in future cryptographic computations; and provide access to stored future keys to an external access entity authorized by the access control module.
19. A method for providing authorized access to cryptographic keys stored in a computing device, said method comprising the steps of the computing device: generating keys in a cryptographic module located within the computing device; storing the keys in the cryptographic module, and keeping said keys stored for a period of time after use of said keys by the computing device; receiving a request from an external access entity to access at least one of the stored keys, wherein said request comprises a digital signature not created on the computing device; validating the digital signature of the external access entity request using a public verification key embedded in the computing device; and providing the external access entity with access to the requested stored cryptographic keys when the digital signature has been validated.
20. The method of clause 19, further comprising the step of the computing device recording information contained in the validated external access entity request in a record that cannot be deleted or modified by the external access entity.
21. The method of clause 19, wherein: the request of the external access entity for access to the stored cryptographic keys comprises a time window; and the stored cryptographic keys provided by the computing device to the external access entity are restricted to keys used by the computing device within said time window.
22. The method of clause 19, wherein: the cryptographic module generates future cryptographic keys for use in the future; and said future cryptographic keys are provided by the computing device to the external access entity only when the time window in the request includes corresponding future times.

The above description is included to illustrate the operation of preferred embodiments, and is not meant to limit the scope of the invention. The scope of the invention is to be limited only by the following claims. From the above description, many variations will be apparent to one skilled in the art that would yet be encompassed by the scope of the present invention.

## Claims

1. A computing device (200) operated by a user of the computing device (200), the computing device (200) comprising:
an access control module (210) configured to authorize an external access entity (266) to access a cryptographic module (240) located within the computing device (200);
wherein the authorization comprises verifying a digital signature affixed by the external access entity (266) using a public verification key (211) embedded in the computing device (200);
wherein the external access entity (266) is a different entity than one of the users (142) of the computing device (200) and is external to the computing device (200);
wherein the cryptographic module (240) is configured to use one or more communication encryption keys (242) for encrypted communications with other devices; and
wherein the cryptographic module (240) is further configured to provide access to the one or more communication encryption keys (242) to the external access entity (266) authorized by the access control module (210).

2. The computing device of claim 1, wherein the access provided by the cryptographic module (240) to the one or more communication encryption keys (242) to an external access entity (266) authorized by the access control module (210) is for a specified amount of time (250, 251, 252), and the cryptographic module (240) is further configured to discontinue the access to any of the communication encryption keys (242) after the specified amount of time expires.

3. The computing device of claim 1 or 2, further comprising:
an access archive module (270) configured to record (271) an authorized access of the cryptographic module (240) by an external access entity (266);
wherein the access archive module (270) is further configured to output recorded information (271) pertaining to authorized access by the external access entity (266).

4. The computing device of claim 1, 2, or 3,
wherein the cryptographic module (240) is further configured to store one or more communication encryption keys (242) for a period of time commencing with the use of the communication encryption keys (242) by the computing device (200) and ending at a time after the communication encryption keys (242) have been used; and
wherein the cryptographic module (240) is further configured to provide access to the stored communication encryption keys (242) to the external access entity (266) authorized by the access control module (210).

5. The computing device of claim 1, 2, 3, or 4, wherein the user is not able to use software to prevent an authorized external access entity (266) from obtaining communication encryption keys (242).

6. A method for providing authorized access to communication encryption keys used in a computing device (200), the method comprising the steps of the computing device (200):
using communication encryption keys in a cryptographic module (240) located within the computing device (200);
receiving an access request (269) from an external access entity (266) to access at least one of the communication encryption keys (242), wherein the access request (269) comprises a digital signature created on an external access entity device (260) which is external to the computing device (200), wherein the external access entity (266) is a different entity than one of the users (142) of the computing device (200);
verifying the digital signature of the external access entity request (269) using a public verification key (211) embedded in the computing device (200); and
providing the external access entity (266) with access to the requested one or more communication encryption keys (242) after the digital signature on the access request (269) has been verified.

7. The method of claim 6 comprising the additional step of discontinuing the external access entity access to any of the communication encryption keys after a specified amount of time expires.

8. The method of claim 6 or 7, further comprising the steps of:
recording in the computing device information contained in the validated external access entity request (269) in a stored record (271); and
outputting the stored record (271) of the validated external access entity request (269).

9. The method of claim 6, 7, or 8, further comprising the steps of:
storing the communication encryption keys (242) on the computing device for a period of time commencing with the use of the communication encryption keys (242) by the computing device (200) and ending at a time after the communication encryption keys (242) have been used; and
providing the external access entity (266) with access to the stored communication encryption keys (242) after the digital signature on the access request (269) has been verified.

10. The method of claim 6, 7, 8, or 9, wherein the user is not able to use software to prevent an authorized external access entity (266) from obtaining communication encryption keys (242).

11. A computer program comprising instructions which, when the program is executed by a computer (200), cause the computer (200) to carry out the method of any of claims 6-10.

12. A computer-readable storage medium comprising instructions which, when executed by a computer (200), cause the computer (200) to carry out the method of any of claims 6-10.
